# EUROPÄISCHE PATENTSCHRIFT

(11) **EP 1 303 973 B1**
(45) Veröffentlichungstag und Bekanntmachung des Hinweises auf die Patenterteilung: **20.03.2013**
(21) Anmeldenummer: 01957941.6
(22) Anmeldetag: 10.07.2001
(51) Int. Cl.: H04M 1/2745, H04M 1/57, H04M 3/493

(54) **VERFAHREN ZUM AUFBAUEN EINER KOMMUNIKATIONSVERBINDUNG UND TELEKOMMUNIKATIONSSYSTEM**
METHOD FOR ESTABLISHING A COMMUNICATION CONNECTION AND TELECOMMUNICATIONS SYSTEM
PROCEDE POUR ETABLIR UNE LIAISON DE COMMUNICATION ET SYSTEME DE TELECOMMUNICATION

(30) Priorität: 11.07.2000 DE 10033614
(43) Veröffentlichungstag der Anmeldung: 23.04.2003
(73) Patentinhaber: Vodafone Holding GmbH, 40213 Düsseldorf (DE)
(72) Erfinder: KLEIER, Stephan, 40545 Düsseldorf (DE); TIMPHUS, Frank, 40233 Düsseldorf (DE); WIETFELD, Christian, 14612 Falkensee (DE); HERZOG, Christian, 13125 Berlin (DE)
(74) Vertreter: Weisse, Renate
(86) Internationale Anmeldenummer: PCT/EP2001/007910
(87) Internationale Veröffentlichungsnummer: WO 2002/005528

(56) Entgegenhaltungen:
- EP-A2- 0 825 752
- WO-A-98/48553
- WO-A-99/60767
- DE-A- 19 740 862
- US-A- 5 204 894
- US-A- 5 983 095

## Beschreibung

Die Erfindung betrifft ein Verfahren zur Speicherung einer Alias-Bezeichnung zur späteren Verwendung beim Aufbauen einer Kommunikationsverbindung zwischen mindestens zwei Telefon-Endgeräten eines Telekommunikationssystems nach dem Oberbegriff des Patentanspruchs 1, sowie ein Telekommunikationssystem, das zur Durchführung eines solchen Verfahrens geeignet ist, entsprechend dem Oberbegriff des Patentanspruchs 16.

Herkömmlicherweise erfolgt der Aufbau einer Verbindung zwischen zwei Endgeräten eines Telefon-Kommunikationssystems, indem ein Benutzer die Rufnummer eines Anschlusses, zu dem er eine Verbindung herstellen möchte, in sein Endgerät eingibt, woraufhin dieses Endgerät die Nummer an ein Vermittlungsnetzwerk des Telefon-Kommunikationssystems überträgt und dieses, sofern die angerufene Rufnummer verfügbar ist, diesem Anschluß den Anruf signalisiert.

Diese althergebrachte Art des Verbindungsaufbaus ist für einen Benutzer unbequem, denn sie erfordert von ihm, daß er die Rufnummer eines gewünschten Gesprächspartners entweder auswendig lernt oder bei Bedarf jedesmal in einer Liste oder einem Telefonbuch nachschlägt.

Eine teilweise Lösung dieses Problems wurde durch Endgeräte wie etwa Telefone oder Telefaxgeräte erreicht, die mit Rufnummerspeichern ausgestattet sind, die es erlauben, eine Rufnummer eines Gesprächspartners in Kombination mit dessen Namen zu speichern und die auf Befehl eines Benutzers hin die gespeicherten Rufnummern und Namen anzeigen und zur Auswahl anbieten. Bei einem solchen Gerät muß der Benutzer lediglich noch den Eintrag aus der angezeigten Liste auswählen, woraufhin das Endgerät die Nummer des Eintrags an das Vermittlungsnetzwerk übermittelt und so den Aufbau einer Verbindung einleitet.

Ein Nachteil dieser Lösung ist jedoch, daß sie nur für solche Rufnummern anwendbar ist, die der Benutzer selbst in das Endgerät eingibt, weil er davon ausgeht, daß er sie öfters benötigen wird. Das erstmalige Anwählen eines Gesprächspartners erfordert auch hier die Eingabe von dessen vollständiger Rufnummer in Ziffernform.

Auf dem Gebiet der Daten-Telekommunikationssysteme, insbesondere des Internets, ist ein Verfahren zum Aufbauen einer Kommunikationsverbindung zwischen zwei Computern bekannt, bei dem ein erster Computer eine Alias-Bezeichnung eines zweiten an einen Server sendet, der diese in eine numerische Bezeichnung umsetzt. Diese wird an den die Verbindung aufbauenden Computer zurückübertragen, der anhand dieser numerischen Bezeichnung in der Lage ist, Datenpakete an den Zielcomputer zu adressieren.

Die Druckschrift WO 99/60767 beschreibt ein Telefonwahlverfahren, bei dem ein Anrufer für einen Anruf mit einem Computer auf einen Datenbank-Server in einem IP- (Internet Protokoll) basierten Netzwerk zugreift. Der Datenbank-Server liefert auf Anfrage eine Rufnummer zu einem von dem Anrufer am Computer eingegebenen Namen. Anschließend ist eine Anwahl der übermittelten Rufnummer direkt mit dem Computer möglich. Für eine Anfrage an den Datenbank-Server wird vorzugsweise ein Web-Browser des Computers verwendet.

In der Druckschrift US 5.204.894 wird ein persönliches Rufnummernverzeichnis für Benutzer in einem Telekommunikationssystem offenbart. Mittels Sprach- oder DTMF-Steuerung wird einem Teilnehmer eine Speicherung und Verwendung von Rufnummern in dem persönlichen Rufnummernverzeichnis ermöglicht. Dazu werden Rufnummern per Sprache übermittelten Namen zugeordnet und in dem Rufnummernverzeichnis gespeichert. Durch Sprechen des Namens kann der Teilnehmer eine Rufnummer des Rufnummernverzeichnisses auswählen und wird anschließend ohne eigenes Zutun mit dieser Rufnummer verbunden.

In der DE 197 40 862 A1 wird ein Verfahren und eine Einrichtung zur Informationsübertragung von einer Auskunftsstelle in einem Telefonnetz zu einem Endgerät beschrieben. Auf einen Anruf eines Teilnehmers bei der Auskunftsstelle wird eine bidirektionale Verbindung aufgebaut und über diese Verbindung eine recherchierte Rufnummer als nonverbale Datennachricht an das Endgerät übertragen und dort zumindest temporär gespeichert. Anschießend ist eine Anwahl der gespeicherten Rufnummer durch einfachen Knopfdruck möglich.

Die WO 98/48553 offenbart ein Verfahren zur Darstellung von Informationen auf einem Endgerät für ein Telefonnetz. Zunächst wird in einem Speicher ein Verzeichnis von Rufnummern und zugeordneten Bildsymbolen gespeichert. Der Speicher ist entweder in einem Endgerät oder im Telefonnetz vorgesehen. In einer Ausführung des beschriebenen Verfahrens wird bei einem Anruf neben der Rufnummer und dem Namen des Anrufers auch das Bildsymbol an das angerufene Endgerät übermittelt und für einen Benutzer dieses Endgeräts dargestellt.

Die US 5.983.095 offenbart ein System und ein Verfahren zur Nutzung einer Mehrzahl von Telefonnummern mit einem einzigen Mobilfunktelefon. Dazu werden zu jeder Mobilfunktelefon-Identifikationsnummer (MIN) mehrere Rufnummern mit jeweils einer zugeordneten alphanummerischen Zeichenfolge in einer Datenbank des Mobilfunknetzes gespeichert. Bei einer Anwahl einer dieser Rufnummern wird mit Hilfe der Datenbank die entsprechende MIN und die zugehörige alphanummerische Zeichenfolge ermittelt und über das Mobilfunknetz zu dem durch die MIN festgelegten Mobilfunktelefone weitergeleitet. Während das Mobiltelefon den Anruf für den Teilnehmer signalisiert, wird entweder die alphanummerische Zeichenfolge als SMS an das Mobilfunktelefon übermittelt oder die angewählte Rufnummer als CLI- (Calling Line Identification) Nummer auf dem Mobilfunktelefon dargestellt. Ein angerufener Teilnehmer wird so darüber informiert, welche der mehreren für das Mobilfunktelefon vorgesehenen Telefonnummern angewählt wurde.

In der EP 0 825 752 A2 wird ein Verfahren und ein System zum Filtern von Sprachnachrichten in einem Kommunikationsnetzwerk beschrieben. Zum Hinterlassen einer Sprachnachricht kann ein Anrufer an eine Rufnummer einen Anhang anhängen. Die Bedeutung des Anhangs ist dem Anrufer zuvor vom Angerufenen mitgeteilt worden. Zudem hat der Angerufene eine Zuordnungsliste von Kennungen wie "wichtig" oder "unwichtig" für Anhänge auf einer Nachrichtenplattform hinterlegt. Je nach Anhang wird jeder Nachricht eine Kennung zugeordnet. Bei einem Abhören der Nachrichten findet eine Filterung und Sortierung der gespeicherten Nachrichten statt. Zusätzlich kann ein Anrufer ein Alias zur Anonymisierung in der Plattform speichern, der für alle Nachrichten an beliebige Empfänger verwendet wird.

Die Aufgabe der Erfindung besteht darin, ein Verfahren zum Aufbauen einer Kommunikationsverbindung zwischen zwei Endgeräten eines Fernsprech-Telekommunikationssystems zu schaffen, das ein vereinfachtes Anwählen eines beliebigen an das Telekommunikationssystem angeschlossenen Endgeräts ohne Kenntnis von dessen Rufnummer erlaubt, sowie ein Fernsprech-Telekommunikationssystem anzugeben, das für die Durchführung des Verfahrens geeignet ist.

Diese Aufgabe wird durch das Verfahren mit den Merkmalen des Patentanspruchs 1 bzw. das Fernsprech-Telekommunikationssystem mit den Merkmalen des Patentanspruchs 16gelöst.

Das Verfahren sieht die Übertragung einer als Alias-Bezeichnung für die Rufnummer eines gewünschten Gesprächspartners eingegebenen alphanumerischen Zeichenfolge an einen Server vor, der daraufhin eine der Alias-Bezeichnung zugeordnete Rufnummer ausgibt. Anhand dieser Rufnummer kann die Verbindung zwischen dem anrufenden Endgerät und einem durch die Rufnummer identifizierten angerufenen Endgerät hergestellt werden.

Ein erfindungsgemäßes Fernsprech-Telekommunikationssystem umfaßt eine Mehrzahl von Anschlüssen für Endgeräte mit jeweils einer eindeutig zugeordneten Rufnummer und ein Vermittlungsnetzwerk zum Vermitteln von Verbindungen zwischen den Anschlüssen. Zusätzlich ist ein Server zum Empfang einer Alias-Bezeichnung von einem anrufenden Anschluß und zum Liefern einer der Alias-Bezeichnung zugeordneten Rufnummer vorgesehen.

Eine einer gegebenen Rufnummer zugeordnete Alias-Bezeichnung wird vorab durch den Inhaber dieser Rufnummer am Server gespeichert. Dies ermöglicht es einem Benutzer des angerufenen Endgeräts beispielsweise, Alias-Bezeichnungen für besondere Zwecke zu vergeben.

Vorteilhafte Ausgestaltungen sind Gegenstand von abhängigen Ansprüchen.

Gemäß einer ersten bevorzugten Ausgestaltung des Verfahrens überträgt der Server die Rufnummer an das anrufende Endgerät, und das anrufende Endgerät baut die Verbindung unter Anwendung der Rufnummer auf. Diese Variante des Verfahrens ist besonders einfach zu realisieren, da sie keinerlei funktionelle Beziehung zwischen dem Server und dem Vermittlungsnetzwerk des Telekommunikationssystems erfordert. Die erforderliche Datenübertragung zwischen anrufendem Endgerät und Server kann über eine von dem betrachtenden Fernsprech-Telekommunikationssystem völlig unabhängige Verbindung stattfinden, oder sie kann innerhalb des Fernsprech-Telekommunikatkionssystems wie eine beliebige andere Verbindung gehandhabt werden, indem der Server selbst als ein Endgerät des Telekommunikationssystems betrieben wird und das anrufende Endgerät zum Abfragen der Alias-Bezeichnung entsprechenden Rufnummer eine normale Verbindung zu dem Server herstellt.

Einer zweiten bevorzugten Variante des Verfahrens zufolge überträgt der Server die Rufnummer direkt an das Vermittlungsnetzwerk des Telekommunikationssystems, welches daraufhin die Verbindung einerseits zu dem anrufenden und andererseits zu dem angerufenen Endgerät herstellt. Diese Variante hat den Vorteil, daß sie einen schnelleren Verbindungsaufbau ermöglicht, weil die Übertragung der vom Server ermittelten Rufnummer an das anrufende Endgerät und zurück an das Vermittlungsnetzwerk fortfällt. Insbesondere wenn das Fernsprech-Telekommunikationssystem ein Mobilfunksystem ist, führt dies auch zu einer wünschenswerten Entlastung der Signalisierungskanäle.

Es kann die Möglichkeit vorgesehen werden, einer Mehrzahl von Rufnummern eine gleiche Alias-Bezeichnung zuzuordnen. Eine solche mehrfach verwendete Alias-Bezeichnung kann z. B. dazu genutzt werden, durch einfaches Anwählen dieser Bezeichnung eine Konferenzschaltung mit den an die mehreren Rufnummern angeschlossenen Endgeräten aufzubauen oder das anrufende Endgerät mit demjenigen der diese Alias-Bezeichnung verwendenden Endgeräte zu verbinden, welches als erstes antwortet.

Einer vorteilhaften Weiterentwicklung zufolge wird dem angerufenen Endgerät signalisiert, wenn es unter Verwendung einer Alias-Bezeichnung anstelle seiner eigentlichen Rufnummer angerufen wird. Dies ermöglicht es einem Benutzer des angerufenen Endgeräts beispielsweise, zeitweilige Alias-Bezeichnungen für besondere Zwecke zu vergeben. So kann z. B. der Inserent einer Kleinanzeige in der Anzeige eine Alias-Bezeichnung für seine Telefonnummer nennen, und er ist anhand der Signalisierung an seinem Endgerät in der Lage, zu erkennen, ob ein Anrufer die Alias-Bezeichnung verwendet, sich also auf die Anzeige meldet, oder ob es sich um einen anderen, direkt an seine Rufnummer gerichteten Anruf handelt, und beispielsweise den an die Alias-Bezeichnung gerichteten Anruf ignorieren, wenn die Anzeige Ihren Zweck erfüllt hat und weitere Anrufe nicht erwünscht sind, und den direkten Anruf beantworten.

Dabei ist es natürlich besonders vorteilhaft, wenn nicht nur die Tatsache, daß eine Alias-Bezeichnung verwendet wird, dem angerufenen Endgerät signalisiert wird, sondern auch die verwendete Alias-Bezeichnung als solche. Dies ermöglicht es einem Benutzer, mehrere Alias-Bezeichnungen jeweils für verschiedene Zwecke zu verwenden und anhand der signalisierten Alias-Bezeichnung noch vor Annahme des Anrufs zu erkennen, aus welchen Grund er angerufen wird.

Einer bevorzugten_Weiterentwicklung des Verfahrens zufolge kann nicht nur dem angerufenen Endgerät, sondern auch dem anrufenden Endgerät eine Alias-Bezeichnung zugeordnet sein, und der Server ordnet der an ihn übertragenen Rufnummer des anrufenden Endgeräts eine Alias-Bezeichnung zu, die daraufhin anstelle der Rufnummer des Anrufers dem angerufenen Endgerät signalisiert wird. Auch diese Alias-Bezeichnung wird zweckmäßigerweise von dem Benutzer der Rufnummer vorab am Server gespeichert. Dies erlaubt es beispielsweise einem Benutzer, ,der seinen eigenen Namen als Alias-Bezeichnung verwendet, sich beim angerufenen Gesprächspartner mit Namen vorzustellen, noch bevor dieser den Anruf entgegengenommen hat und die Gesprächsverbindung zustande gekommen ist.

Bei dieser Weiterentwicklung des Verfahren ist es ferner vorteilhaft, wenn die Möglichkeit besteht, mehrere Alias-Bezeichnungen des anrufenden Endgeräts zu speichern. Der Server kann unter diesen mehreren Alias-Bezeichnungen die auszugebenden anhand einer vom anrufenden Endgerät signalisierten Zusatzinformation auswählen, so daß der Benutzer des anrufenden Endgeräts bei jedem einzelnen Anruf die Möglichkeit hat, anhand dieser Zusatzinformation die zu verwendende Alias- Bezeichnung festzulegen; der Server kann aber die Auswahl der zu verwendenden Alias-Bezeichnung auch selbstständig anhand der Identität des angerufenen Endgerätes treffen. Diese zweite Variante eröffnet dem Anrufer die Möglichkeit, unterschiedliche Alias-Bezeichnungen z. B. für geschäftliche und private Anrufe zu benutzen, in dem er zu einem gegebenen Endgerät, das durch seine Rufnummer oder seine Alias-Bezeichnung spezifiziert sein kann, jeweils ein Atribut wie etwa "geschäftlich" oder "privat" am Server speichert, anhand dessen der Server die zu verwendende Alias-Bezeichnung des Anrufers auswählt.

Zum Eingeben einer Alias-Bezeichnung wird zweckmäßigerweise eine Eingabemaske vorab an das anrufende Endgerät übertragen, um auf einem Anzeigeschirm des anrufenden Endgeräts angezeigt zu werden. Zu diesem Zweck ist das anrufende Endgerät vorzugsweise mit einem WAP-Browser ausgestattet, der zum Anzeigen der Maske eingesetzt wird. Der WAP-Übertragungsweg wird vorzugsweise auch zur Übertragung der eingegebenen Alias-Bezeichnung an den Server eingesetzt.

Komplementär dazu ist wünschenswert, daß auch das angerufene Endgerät über einen WAP-Browser verfügt, so daß dieser zum Anzeigen von den eingehenden Anruf betreffenden Informationen genutzt werden kann, deren Übertragung in dem Signalisierungsprotokoll des zugrundeliegenden Fernsprech-Telekommunikationssystems nicht zwangsläufig vorgesehen sein muß.

Um den Aufwand beim Aufbau einer Verbindung insbesondere zu einem Endgerät, das häufig angerufen wird, zu reduzieren, ist es zweckmäßig, wenn das anrufende Telefonendgerät über eine eigene Datenbank für Alias-Bezeichnungen verfügt, in der es zunächst die einer eingegebenen Alias-Bezeichnung entsprechende Rufnummer zu ermitteln versucht. Falls die Rufnummer in dieser Datenbank gefunden wird, kann die Verbindung direkt unter Verwendung der Rufnummer aufgebaut werden; nur wenn der Versuch scheitert, muß die Alias-Bezeichnung an den Server übertragen werden, um die zugehörige Rufnummer herauszufinden.

Wenn das anrufende Endgerät über eine solche Datenbank verfügt, kann ferner vorgesehen werden, daß eine vom Server zu einer Alias-Bezeichnung ermittelte Rufnummer an das Endgerät zurückübertragen wird, um dort in Verbindung mit der Alias-Bezeichnung in der Datenbank gespeichert zu werden.

Ausführungsbeispiele der Erfindung werden nachfolgend anhand der Zeichnung näher erläutert. Es zeigen:
Fig. 1 ein schematisches Blockdiagramm eines Fernsprech-Telekommunikationssystems gemäß der vorliegenden Erfindung;
Fig. 2 bis 4 jeweils Beispiele von Verfahren zum Aufbauen einer Kommunikationsverbindung zwischen zwei Endgeräten des Fernsprech-Telekommunikationssystems aus Fig. 1.

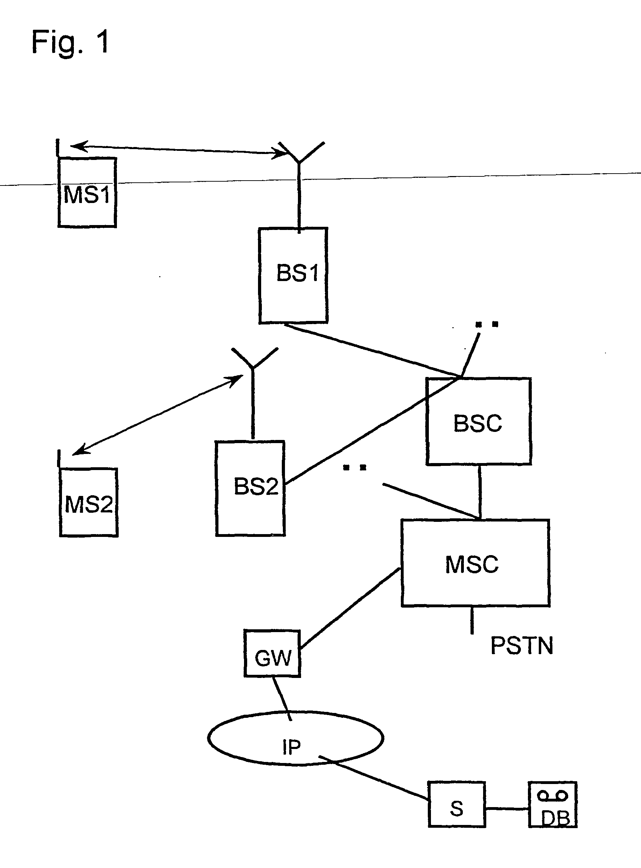

Fig. 1 zeigt die Struktur eines Fernsprech-Telekommunikationssystems, hier eines FunkKommunikationssystems, gemäß der vorliegenden Erfindung. Es umfaßt eine Vielzahl von Mobilvermittlungsstellen MSC, die untereinander vernetzt sind bzw. den Zugang zu einem Festnetz PSTN sowie über ein WAP-Gateway zu einem IP-Netzwerk herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtverbindung zu Teilnehmerstationen MS1, MS2 aufbauen. Die Gesamtheit der Basisstationen BS1 und BS2, Basisstationscontroller BSC und Mobilvermittlungsstellen MSC kann als ein Vermittlungsnetzwerk zum Vermitteln von Verbindungen jeweils zwischen den Endgeräten MS1, MS2 entsprechenden Anschlüssen aufgefaßt werden; genauso kann im Sinne der vorliegenden Erfindung die Gesamtheit der genannten Einheiten zusammen mit dem Festnetz PSTN als ein Vermittlungsnetzwerk zum Vermitteln von Verbindungen zwischen Anschlüssen des Mobilfunk-Kommunikationssystems und des Festnetzes angesehen werden.

Über das IP-Netzwerk ist ein Server S mit dem Vermittlungsnetzwerk verbunden, der über eine Datenbank verfügt, in der für die Anschlüsse des Mobilfunk-Kommunikationssystems und eventuell auch die des Festnetzes Alias-Bezeichnungen in Verbindung mit Rufnummern der einzelnen Anschlüsse gespeichert sind. Die Zahl der Alias-Bezeichnungen, die zu einem einzelnen Anschluß in der Datenbank gespeichert sind, ist nicht festgelegt; sie kann eins oder mehr betragen oder für einen Teil der Anschlüsse Null sein. Die Endgeräte MS1, MS2 des Mobilfunk-Kommunikationssystems, deren_Verbindungen nach dem noch genauer zu beschreibenden erfindungsgemäßen Verfahren aufgebaut werden, sind WAP-fähig, so daß sie über den WAP-Gateway mit dem Server S kommunizieren können. Weitere Endgeräte, deren Verbindungen nach einem herkömmlichen Verfahren durch Eingeben der Rufnummer eines gewünschten Gesprächspartners am Endgerät aufgebaut werden, können ebenfalls dem Mobilfunk-Kommunikationssystem angehören.

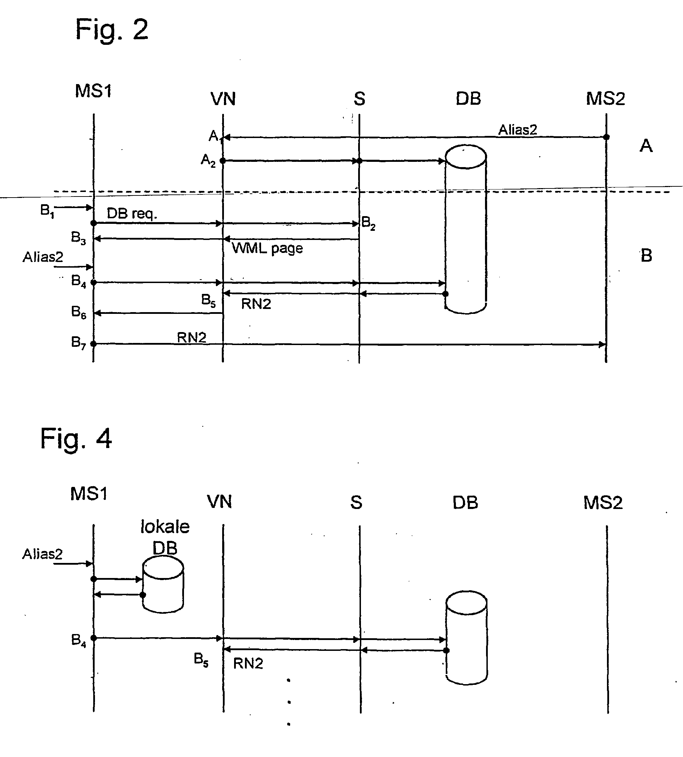

Fig. 2 zeigt ein erstes Beispiel eines Verfahrens zum Aufbauen einer Kommunikationsverbindung zwischen zwei Endgeräten, hier zwei Mobilfunk-Endgeräten MS1 und MS2. Dabei versteht sich, daß das Verfahren in gleicher Weise zwischen einem Mobilfunk- und einem Festnetzendgerät oder zwischen zwei Festnetzendgeräten einsetzbar ist.

In einer vorbereitenden ersten Stufe des Verfahrens, in der Fig. mit A bezeichnet, wird eine Alias-Bezeichnung für den Anschluß des Endgeräts MS2 festgelegt. Zu diesem Zweck stellt das Endgerät MS2 über das Vermittlungsnetzwerk VN eine Verbindung zum Server S her und überträgt an diesen eine vom Benutzer in das Endgeräts MS2 eingegebene Alias-Bezeichung Alias2. Der Server überprüft die Berechtigung des Benutzers zur Festlegung einer Alias-Bezeichnung, z.B. anhand eines vom Benutzer ebenfalls in das Endgerät MS2 einzugebenden und vom Endgerät MS2 an den Server übertragenen Schlüssels.

Wenn die Überprüfung ergibt, daß der Benutzer berechtigt ist, prüft der Server als nächstes, ob die Alias-Bezeichnung einer anderen Rufnummer als der des Endgeräts MS2 zugeordnet ist. Wenn nicht, wird die Alias-Bezeichnung in die Datenbank B in Verbindung mit der Rufnummer des Endgeräts MS2 eingetragen.

Wenn die Alias-Bezeichnung bereits vergeben ist, verweigert gemäß einer ersten Variante des Verfahrens der Server S die Eintragung in die Datenbank und gibt dem Benutzer Gelegenheit, eine neue Alias-Bezeichnung zu wählen.

Einer zweiten, weiterentwickelten Variante des Verfahrens zufolge überprüft der Server in einem solchem Fall, ob der Benutzer auch an der bereits registrierten Alias-Bezeichnung berechtigt ist, z. B. durch Abfragen eines Schlüssels, der dem Anschluß zugeordnet ist, für den die Alias-Bezeichnung bereits eingetragen ist. Wenn der Benutzer diesen Schlüssel nennen kann, wird die Bezeichnung Alias2, obwohl sie bereits vergeben ist, auch für das Endgerät MS2 in der Datenbank DB eingetragen. Auf die möglichen Anwendungen einer solchen Mehrfacheintragung der gleichen Alias-Bezeichnung wird an späterer Stelle eingegangen.

Der Abschnitt B von Fig. 2 stellt die einzelnen Signalisierungsschritte dar, die beim Aufbau einer Verbindung von einem Endgerät MS1 zu dem Endgerät MS2 ablaufen. In einem ersten Schritt B₁ gibt ein Benutzer am Endgerät MS1 ein, das er eine Verbindung einer Alias-Bezeichnung aufbauen möchte. Das Endgerät MS1 kontaktiert daraufhin in Schritt B₂ über das Vermittlungsnetzwerk VN den Server S und erhält von diesem eine WML-Seite zurück übertragen, die mit Hilfe eines WAP-Browsers des Endgeräts MS1 auf einem Anzeigeschirm von diesem angezeigt wird. Die WML-Seite enthält eine Eingabemaske, in die der Benutzer die Alias-Bezeichnung Alias2 des gewünschten Gesprächspartners einträgt. Die Alias-Bezeichnung wird an den Server S übertragen (Schritt B₄), der daraufhin die Datenbank DB nach einer entsprechenden Rufnummer durchsucht. Wenn eine solche Rufnummer RN2 gefunden wird, wird sie an das Vermittlungsnetzwerk VN übertragen (Schritt B₅) und von dort an das Endgerät MS1 weitergegeben (Schritt B₆).

Das Endgerät MS1 ist nun in der Lage, in Schritt B₇ eine Gesprächsverbindung zum Endgerät MS2 unter Verwendung der Rufnummer RN2 aufzubauen, wobei die hierfür erforderliche Signalisierung über das Vermittlungsnetzwerk VN in exakt der gleichen Weise ablaufen kann, als wenn die Rufnummer RN2 direkt vom Benutzer in das Endgerät MS1 eingegeben worden wäre.

Das oben beschriebene Verfahren zum Aufbauen einer Verbindung zwischen den Endgeräten MS1 und MS2 impliziert den vorherigen Aufbau einer Verbindung vom Endgerät MS1 zum Server S, auf der die Schritte B₂ bis B₅ abgewickelt werden und die nach Durchführung des Schritts B₅ abgebaut und durch eine Verbindung zum Endgerät MS2 ersetzt werden kann. Dieses Verfahren hat den Vorteil, das es mit den Signalisierungsprotokollen bekannter Fernsprechkommunikationssysteme kompatibel ist, denn der Informationsaustausch zwischen dem Endgerät MS1 und dem Server S wird in einer höheren, von der Signalisierung des zugrundeliegenden Fernsprech-Kommunikationssystems unabhängigen Protokollschicht abgewickelt. Alternativ ist selbstverständlich auch denkbar, den Server direkt in das Vermittlungsnetzwerk einzugliedern und die in dem Vermittlungsnetzwerk verwendete Signalisierung um Funktionen für den Dialog mit dem Server zu erweitern.

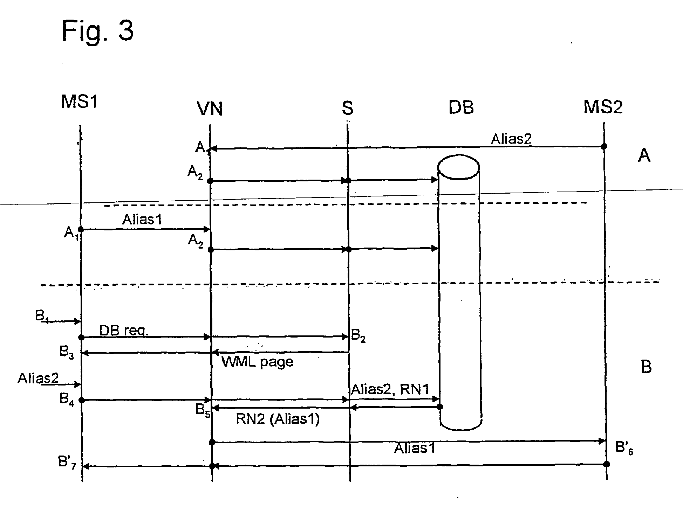

Fig. 3 zeigt eine weiterentwickelte Ausgestaltung des Verfahrens, bei der Schritte, die bereits mit Bezug auf Fig. 2 beschrieben worden, mit den gleichen Bezeichnungen versehen sind.

Diese Ausgestaltung sieht vor, daß die Schritte A₁, A₂ des Speicherns einer Alias-Bezeichnung Alias1 bzw. Alias2 in der Datenbank DB des Servers S für beide Endgeräte MS1 und MS2 durchgeführt werden.

Die Schritte B₁ bis B₃ sind mit denen der Fig. 2 identisch; in Schritt B₄ wird außer der Bezeichnung Alias2 des Endgeräts MS2 auch die Rufnummer RN1 des Endgeräts MS1 an die Datenbank DB übertragen. In Schritt B₅ liefert die Datenbank die Rufnummer RN2 des Endgeräts MS2 und die anhand der Rufnummer RN1 ermittelte Bezeichnung Alias1 des Endgeräts MS1 an das Vermittlungsnetzwerk VN. Anders als beim Verfahren von Fig. 2 leitet das Vermittlungsnetzwerk diese Informationen jedoch nicht an das Endgerät MS1 weiter, sondern baut seinerseits eine Verbindung zum Endgerät MS2 unter gleichzeitiger Signalisierung der Bezeichnung Alias1 des Endgeräts MS1 auf (Schritt B'₆). Wenn der Aufbau der Verbindung zum Endgerät MS2 erfolgreich ist, das heißt wenn das Endgerät MS2 den Anruf beantwortet, kappt das Vermittlungsnetzwerk die bis dahin bestehende Verbindung des Endgeräts MS2 zum Server S und ersetzt sie durch die Verbindung zum Endgerät MS2 (Schritt B'₇).

Dabei kann in Schritt B'₆ die Übermittlung der Bezeichnung Alias1 an das Endgerät MS2 im Rahmen der herkömmlicherweise mit dem Verbindungsaufbau verbundenen Signalisierung erfolgen, indem das Signalisierungsprotokoll dahin gehend erweitert wird, das es nicht nur die Übertragung von Ziffern, wie derzeit im ISDN- oder GSM- Netzen üblich, sondern zusätzlich auch die von Buchstaben oder allgemein von beliebigen alphanumerischen Zeichen zuläßt.

Alternativ dazu kann der Schritt B₅ auch in zwei Teilschritte zerlegt werden, nämlich zum einem die Übertragung der Bezeichnung Alias1 an das Endgerät MS2 unter Verwendung des WAP-Übertragungsweges, das heißt durch "Pushen" einer WML-Seite auf das Endgerät MS2, die dieses veranlaßt, die Bezeichnung Alias1 anzuzeigen, und parallel dazu die Übermittlung der RN2 an das Vermittlungsnetzwerk, so daß dieses unabhängig von der Übermittlung des Alias1 die Verbindung zum Endgerät MS2 aufbauen kann. Für den Benutzer des Endgeräts MS2 bedeutet dies: wenn das Gerät infolge der in Schritt B'₆ übertragenen Signalisierung zu läuten beginnt, hat es zuvor bereits die Bezeichnung Alias1 empfangen, und diese ist auf einem Anzeigeschirm des Geräts zu lesen.

Fig. 4 zeigt eine Weiterentwicklung der in Bezug auf Fig. 2 und 3 beschriebenen Verfahren, die mit einem Endgerät durchführbar ist, das über eine eigene lokale Datenbank für Rufnummern und zugeordnete Alias-Bezeichnungen verfügt. Nach der Eingabe der Bezeichnung_Alias2 eines_gewünschten Gespräch partners durch einen Benutzer des Endgeräts MS1 überprüft dieses zunächst in der lokalen Datenbank, ob dort die Bezeichnung und eine zugehörige Rufnummer gespeichert ist.

Wenn dies der Fall ist, geht das Verfahren direkt zum Schritt B₆ von Fig. 2 über, in welchem das Endgerät MS2 unter Verwendung der in der lokalen Datenbank gefundenen Rufnummer angewählt wird. Erst wenn die Suche in der lokalen Datenbank erfolglos ist, richtet das Endgerät MS1 in Schritt B₄ eine Anfrage nach der zu der Bezeichnung gehörenden Rufnummer an die Datenbank DB des Servers S. Die gefundene Rufnummer wird anschließend entsprechend dem Schritt B₅ an das Vermittlungsnetzwerk VN übertragen. Von dort kann sie wie in Schritt B₆ aus Fig.2 ohne Auswertung durch das Vermittlungsnetzwerk unmittelbar an das Endgerät MS1 übertragen werden, das daraufhin Schritt B₇ ausführt, oder das Vermittlungsnetzwerk VN stellt daraufhin mit den Schritten B'₆, B'₇ die Verbindung zwischen den zwei Endgeräten her.

Bislang ist bei der Beschreibung des Verbindungsaufbaues davon ausgegangen worden, daß die Alias-Bezeichnungen einer Rufnummer eindeutig zugeordnet sind. Wie aber bereits mit Bezug auf Teil A von Fig.2 ausgeführt, muß dies nicht notwendigerweise der Fall sein.

Eine Möglichkeit ist, daß in der Datenbank DB des Servers mehreren Alias-Bezeichnungen des anrufenden Endgerätes MS1 gespeichert sind. Die Festlegung mehrerer Alias-Bezeichnungen für einen Anschluß bzw. ein Endgerät kann für einen Benutzer zweckmäßig sein, der von dem Anschluß aus sowohl private als auch geschäftliche Gespräche führt. Ein solcher Benutzer erhält in Schritt B₃ eine Eingabemaske übertragen, die nicht nur ein Feld zum Eingeben der Bezeichnung des gewünschten Gesprächspartners enthält, sondern auch eine Liste der von ihm selbst verwendeten Alias-Bezeichnungen, z.B. seines Eigennamens für Privatgespräche und seiner geschäftlichen Bezeichnung für geschäftliche Gespräche. Durch Auswählen einer Bezeichnung in der Liste kann der Benutzer bestimmen, welche seiner diversen Alias-Bezeichnungen an das angerufene Endgerät MS2 übermittelt wird.

Als Weiterentwicklung kann vorgesehen werden, daß die vom Benutzer ausgewählte Alias-Bezeichnung nicht nur zum angerufenen Endgerät MS2, sondern auch zurück zum Server übertragen wird, der die ausgewählte Alias-Bezeichnung in Verbindung mit der angewählten Rufnummer oder Alias-Bezeichnung des Endgerätes MS2 abspeichert. Wenn der Benutzer des Endgerätes MS1 ein weiteres Mal das Endgerät MS2 anwählt, ist es nicht mehr notwendig, daß er erneut die zu verwendende Alias-Bezeichnung auswählt; wenn er dies nicht tut, verwendet der Server automatisch die beim vorherigen Anruf verwendete.

Auch dem angerufenen Endgerät MS2 können mehrere Alias-Bezeichungen zugeordnet sein. Dies verursacht technisch keinerlei Probleme, da stets eine eindeutige Zuordnung der Alias-Bezeichnung zu der Rufnummer des Endgerätes möglich ist. Auch hier kann ein Benutzer z.B. eine geschäftliche Bezeichnung und einen Eigennamen als Alias-Bezeichnungen verwenden. Die Übermittlung der von einem anrufenden Gesprächspartner angewählten Alias-Bezeichnung an das angerufene Endgerät erlaubt es dem angerufenen Benutzer, zu erkennen, ob man ihn privat oder geschäftlich sprechen möchte.

Auch die Zuordnung gleicher Alias-Bezeichnungen an mehrere Anschlüsse bzw. Endgeräte ist möglich. Dadurch ergibt sich eine Mehrzahl von nützlichen Anwendungen. Zum einen kann dem anrufenden Endgerät MS1 die gleiche Alias-Bezeichnung wie einer Mehrzahl von anderen Endgeräten zugeordnet sein. So können z.B. mehrere Endgeräte einer Gesellschaft, z.B. einer Anwaltskanzlei, die unterschiedliche Rufnummern haben, die gleiche Alias-Bezeichnung verwenden, um so einem angerufenen Gesprächspartner einheitlich zu signalisieren, daß der Anruf von der Kanzlei kommt. Weiterhin_kann ein Anwalt der Kanzlei die Alias-Bezeichnung der Kanzlei als eine von mehreren Alias-Bezeichnungen seines Privatanschlusses verwenden, um auch von dort aus Anrufe führen zu können, die für einen Angerufenen als von der Kanzlei kommend erkennbar sind.

Falls umgekehrt ein Anrufer die Kanzlei unter der Verwendung ihrer Alias-Bezeichnung zu erreichen versucht, liefert der Server als zugehörige Rufnummer stets eine einzige der mehreren zugeordneten Rufnummern, zweckmäßigerweise die des Sekretariats, von wo aus eintreffende Anrufe an die diversen Mitarbeiter der Kanzlei weiter vermittelt werden können.

Alternativ kann vorgesehen werden, daß wenn eine von mehreren Endgeräten verwendete Alias-Bezeichnung angerufen wird, der eintreffende Anruf allen die Bezeichnung verwendenden Endgeräten solange signalisiert wird, bis das erste dieser Endgeräte den Ruf beantwortet. Eine solche Regelung ist z.B. für Alias-Bezeichnungen zweckmäßig, die für Notruf- oder Servicedienste verwendet werden.

Eine dritte Alternative ist, daß ein an eine von mehreren Endgeräten verwendete Alias-Bezeichnung gerichteter Anruf allen Endgeräten signalisiert wird und alle Endgeräte, die den Ruf beantworten, in einer Konferenzschaltung eingebunden werden. Falls also für eine Gruppe von Endgeräten bekannt ist, daß wiederholt Bedarf nach einer Konferenzschaltung zwischen ihnen bestehen wird, kann der Aufbau einer solchen Konferenzschaltung durch Vergabe einer gemeinsamen Alias-Bezeichnung für alle Geräte erheblich erleichtert werden, und der Angerufene kann anhand der angezeigten Alias-Bezeichnung sofort erkennen, daß er zu einer Konferenzschaltung gebeten wird.

Die dritte Alternative ist ferner geeignet zum Versenden von Nachrichten, beispielsweise per SMS oder Telefax, in einem Abonnement-System. So kann z.B. der Versender solcher Nachrichten allen Abonnementskunden eine gleiche Alias-Bezeichnung zuordnen,_und_durch_Versenden einer einzigen Nachricht an die gemeinsam benutzte Alias-Bezeichnung die Nachricht sofort an alle Abonnementskunden verbreiten.

## Patentansprüche

1. Verfahren zur Speicherung einer Alias-Bezeichnung zur späteren Verwendung beim Aufbauen einer Kommunikationsverbindung zwischen mindestens zwei Endgeräten (MS1, MS2) eines Fernsprech-Telekommunikationssystems, bei dem eine an einem anrufenden Endgerät (MS1) als Alias-Bezeichnung eingegebene alphanumerische Zeichenfolge (Alias2) an einen Server übertragen wird (B₄), eine der Alias Bezeichnung zugeordnete Rufnummer (RN2) vom Server (S) ausgegeben wird (B₅,B'₅) und die Verbindung zwischen dem anrufenden Endgerät (MS1) und einem durch die Rufnummer (RN2) identifizierten angerufenen Endgerät (MS2) hergestellt wird (B₆; B'₆, 67), **dadurch gekennzeichnet, dass**
der Server (S) vorab eine Zuordnung mindestens einer Alias-Bezeichnung (Alias2) zu einer Rufnummer des angerufenen Endgeräts (MS2) von einem Benutzer des angerufenen Endgeräts (MS2) empfängt und speichert (A₁, A₂), wobei
der Server (S) zunächst eine Berechtigung des Benutzers zur Festlegung einer Alias-Bezeichnung (Alias2)zum Anrufen seines Endgeräts (MS2)überprüft,
der Server (S) anschließend überprüft, ob die Alias-Bezeichnung (Alias2) bereits für eine andere Rufnummer vergeben ist, und die Alias-Bezeichnung (Alias2) für das Endgerät (MS2) nur in eine Datenbank (DB) des Servers (S) eingetragen wird, wenn der Benutzer zur Festlegung berechtigt ist und
(a) die Alias-Bezeichnung (Alias2) nicht vergeben ist oder
(b) der Benutzer auch an der bereits vergebenen Alias-Bezeichnung (Alias2) berechtigt ist, wodurch einer Mehrzahl von Rufnummern eine gleiche Alias-Bezeichnung zugeordnet wird.

2. Verfahren nach Anspruch 1, **dadurch gekennzeichnet, daß** der Server (S) die Rufnummer (RN2) an das anrufende Endgerät überträgt (B₅), und daß das anrufende Endgerät (MS1) die Verbindung unter Anwendung der Rufnummer aufbaut (B₆).

3. Verfahren nach Anspruch 1, **dadurch gekennzeichnet, daß** der Server (S) die Rufnummer (RN2) an ein Vermittlungsnetzwerk (VN) überträgt, das die Verbindung einerseits zu dem anrufenden (MS1) und andererseits zu dem angerufenen Endgerät (MS2) herstellt (B'₆, B₇).

4. Verfahren nach einem der vorhergehenden Ansprüche, **dadurch gekennzeichnet, daß** dem angerufenen Endgerät (MS2) signalisiert wird, daß es unter Verwendung einer Alias-Bezeichnung anstelle der Rufnummer des angerufenen Endgeräts (MS2) angerufen wird.

5. Verfahren nach Anspruch 4, **dadurch gekennzeichnet, daß** die am anrufenden Endgerät (MS1) eingegebene Alias-Bezeichnung (Alias2) dem angerufenen Endgerät (MS2) signalisiert wird.

6. Verfahren nach einem der vorhergehenden Ansprüche, **dadurch gekennzeichnet, daß** der Server (S) der an ihn übertragenen Rufnummer (RN1) des anrufenden Endgeräts (MS1) eine vom Benutzer des anrufenden Endgeräts (MS1) zuvor am Server (S) gespeicherte Alias-Bezeichnung (Alias1) zuordnet, und daß die Alias-Bezeichnung (Alias1) anstelle einer Rufnummer dem angerufenen Endgerät (MS2) signalisiert wird.

7. Verfahren nach Anspruch 6, **dadurch gekennzeichnet, daß** der Server unter mehreren gespeicherten Alias-Bezeichnungen des anrufenden Endgeräts (MS1) eine auswählt.

8. Verfahren nach Anspruch 7, **dadurch gekennzeichnet, daß** der Server (S) die Auswahl anhand einer vom anrufenden Endgerät (MS1) signalisierten Zusatzinformation trifft.

9. Verfahren nach Anspruch 7, **dadurch gekennzeichnet, daß** der Server die Auswahl anhand der Identität des angerufenen Endgeräts (MS2) trifft.

10. Verfahren nach einem der vorhergehenden Ansprüche, **dadurch gekennzeichnet, daß** eine Eingabemaske zum Eingeben der Alias-Bezeichnung (Alias2) vorab an das anrufende Endgerät (MS1) übertragen wird (B₃), um auf einem Anzeigeschirm des anrufenden Endgeräts (MS1) angezeigt zu werden.

11. Verfahren nach Anspruch 10, **dadurch gekennzeichnet, daß** das anrufende Endgerät (MS1) über einen WAP-Browser verfügt und daß die Eingabemaske mit Hilfe des WAP-Browsers angezeigt wird.

12. Verfahren nach einem der vorhergehenden Ansprüche, **dadurch gekennzeichnet, daß** das anrufende Endgerät (MS1) WAP-fähig ist und daß die Alias-Bezeichnung (Alias2) des angerufenen Endgeräts (MS2) an den Server (S) auf dem WAP-Übertragungsweg übertragen wird.

13. Verfahren nach einem der vorhergehenden Ansprüche, **dadurch gekennzeichnet, daß** das angerufene Endgerät (MS2) über einen WAP-Browser verfügt und daß der WAP-Browser zum Anzeigen von den eingehenden Anruf betreffenden Informationen genutzt wird.

14. Verfahren nach einem der vorhergehenden Ansprüche, **dadurch gekennzeichnet, daß** das anrufende Endgerät (MS1) auf die Eingabe einer Alias-Bezeichnung (Alias2) hin zuerst anhand einer eigenen Datenbank versucht, eine Rufnummer zu der Alias-Bezeichnung zu ermitteln und erst wenn dieser Versuch scheitert, die Alias-Bezeichnung (Alias2) an den Server (S) überträgt.

15. Verfahren nach einem der Ansprüche 6 bis 14, **dadurch gekennzeichnet, dass** dem anrufenden Endgerät (MS1) die gleiche Alias-Bezeichnung (Alias1) wie einer Mehrzahl von anderen Endgeräten zugeordnet wird.

16. Fernsprech-Telekommunikationssystem zum Speichern und späteren Verwenden einer Alias-Bezeichnung bei einem Verbindungsaufbau mit einer Mehrzahl von Anschlüssen für Endgeräte (MS1, MS2), denen jeweils eine Rufnummer (RN1, RN2) eindeutig zugeordnet ist, einem Vermittlungsnetzwerk (VN) zum Vermitteln von Verbindungen zwischen den Anschlüssen und einem Server (S) zum Empfangen einer als Alias-Bezeichnung eines angerufenen Anschlusses fungierenden alphanumerischen Zeichenkette (Alias2) von einem anrufenden Anschluß (MS1), und zum Liefern einer der Alias-Bezeichnung (Alias2) zugeordneten Rufnummer (RN2), **dadurch gekennzeichnet, dass** der Server (S) ausgebildet ist zum Empfangen und Speichern einer Zuordnung mindestens einer Alias-Bezeichnung (Alias2) zu einer Rufnummer des angerufenen Endgeräts (MS2) von einem Benutzer des angerufenen Endgeräts (MS2), wobei der Server (S) zunächst eine Berechtigung des Benutzers zur Festlegung einer Alias-Bezeichnung (Alias2)zum Anrufen seines Endgeräts (MS2)überprüft,
der Server (S) anschließend überprüft, ob die Alias-Bezeichnung (Alias2) bereits für eine andere Rufnummer vergeben ist, und die Alias-Bezeichnung (Alias2) für das Endgerät (MS2) nur in eine Datenbank (DB) des Servers (S) eingetragen wird, wenn der Benutzer zur Festlegung berechtigt ist und
(a) die Alias-Bezeichnung (Alias2) nicht vergeben ist oder
(b) der Benutzer auch an der bereits vergebenen Alias-Bezeichnung (Alias2) berechtigt ist, wodurch einer Mehrzahl von Rufnummern eine gleiche Alias-Bezeichnung zugeordnet wird.

17. Fernsprech-Telekommunikationssystem nach Anspruch 16, **dadurch gekennzeichnet, daß** der Server mit jedem Anschluß zur Übertragung einer zugeordneten Rufnummer (RN2) an diesen Anschluß verbindbar ist.

18. Fernsprech-Telekommunikationssystem nach Anspruch 16, **dadurch gekennzeichnet, daß** der Server zur Übertragung einer zugeordneten Rufnummer (RN2) mit einem Vermittlungsnetzwerk (VN) verbindbar ist.

19. Fernsprech-Telekommunikationssystem nach einem der Ansprüche 16 bis 18, **dadurch gekennzeichnet, daß** der Server ein WAP-Server ist.

20. Fernsprech-Telekommunikationssystem nach einem der Ansprüche 16 bis 19, **dadurch gekennzeichnet, daß** es ein Mobilfunksystem ist.

## Claims

1. A method for storing an alias name for later use when establishing a communication link between least two terminals (MS 1, MS2) of a telephony-telecommunications system, wherein an alphanumeric string (Alias2) entered in a calling terminal (MS1) as an alias name is transferred (B4) to a server, a call number (RN2) assigned to the alias name is outputted (B5, B'5) by the server (S), and the connection between the calling terminal (MS1) and a called terminal (MS2) identified by the call number (RN2) is established (B6; B'6, 67), **characterized in that**
the server (S) in advance receives and stores (A₁, A₂) an assignment of at least one alias name (Alias2) to a call number of the called terminal (MS2) from a user of the called terminal (MS2), wherein
the server (S) first checks an authorization of the user to define an alias name (Alias2) for calling his terminal (MS2),
the server (S) subsequently checks, whether the alias name (Alias2) is already assigned to another call number, and the alias name (Alias2) for the terminal (MS2) is only registered in a database (DB) of the server (S), if the user is authorized to define an alias name and
(a) the alias name (Alias2) has not been assigned before or
(b) the user is also entitled to the previously assigned alias name (Alias2), whereby a plurality of call numbers are assigned to the same alias name.

2. A method according to claim 1, **characterized in that** the server (S) transmits the call number (RN2) to the calling terminal (B₅), and that the calling terminal (MS1) establishes (B₆) the connection by using the call number.

3. A method according to claim 1, **characterized in that** the server (S) transmits the call number (RN2) to a switching network (VN), which establishes (B'₆, B₇) the connection on the one hand to the calling terminal (MS1) and on the other hand to the called terminal (MS2).

4. A method according to any one of the preceding claims, **characterized in that** the called terminal (MS2) is signaled that it is called using an alias name instead of the call number of the called terminal (MS2).

5. A method according to claim 4, **characterized in that** the alias name (Alias2) entered in the calling terminal (MS1) is signaled to the called terminal (MS2).

6. A method according to any one of the preceding claims, **characterized in that** the server (S) assigns an alias name (Alias 1) which was previously stored at the server (S) by the user of the calling terminal (MS1), to the call number (RN1) of the calling terminal (MS1) transmitted to the server, and that the alias name (Alias1) is signaled to the called terminal (MS2) instead of a call number.

7. A method according to claim 6, **characterized in that** the server selects one from a plurality of stored alias names of the calling terminal (MS1).

8. A method according to claim 7, **characterized in that** the server (S) makes the selection based on a additional information signaled from the calling terminal (MS1).

9. A method according to claim 7, **characterized in that** the server makes the selection based on the identity of the called terminal (MS2).

10. A method according to any one of the preceding claims, **characterized in that** in advance an input mask for inputting the alias name (Alias2) is transmitted (B₃) to the calling terminal (MS1) to be shown on a display screen of the calling terminal (MS1).

11. A method according to claim 10, **characterized in that** the calling terminal (MS1) comprises a WAP browser and that the input mask is displayed by means of the WAP browser.

12. A method according to any one of the preceding claims, **characterized in that** the calling terminal (MS1) is WAP-enabled and that the alias name (Alias2) of the called terminal (MS2) is transmitted to the server (S) by WAP transmission.

13. A method according to any one of the preceding claims, **characterized in that** the called terminal (MS2) comprises a WAP browser and that the WAP browser is used for displaying information of the incoming call.

14. A method according to any one of the preceding claims, **characterized in that** the calling terminal (MS1), on the input of an alias name (Alias2), first tries to determine a call number of the alias name using an own database and only if this attempt fails, transmits the alias name (Alias2) to the server (S).

15. A method according to any one of claims 6 to 14, **characterized in that** the the same alias name (Alias 1) is assigned to the calling terminal (MS1) as to a plurality of other terminals.

16. A telephony telecommunications system for storage and later use of an alias name for a connection setup with a plurality of ports for terminals (MS1, MS2), each of which a call number (RN1, RN2) is uniquely assigned to, a switching network (VN) for switching connections between the ports and a server (S) for receiving from a calling port (MS1) an alphanumeric string (Alias2) serving as an alias name of a called port, and for providing a call number (RN2) assigned to the alias name (Alias2), **characterized in that**
the server (S) is adapted for receiving and storing an assignment of at least one alias name (Alias2) to a call number of the called terminal (MS2) from a user of the called terminal (MS2), wherein the server (S) first checks authorization of the user to define an alias name (Alias2) for calling his terminal (MS2),
the server (S) subsequently checks whether the alias name (Alias2) is already assigned to another call number, and the alias name (Alias2) for the terminal (MS2) only registered in a database (DB) of the server (S), if the user is authorized for defining and
(a) the alias name (Alias2) is not assigned, or
(b) the user is also entitled to the previously assigned alias name (Alias2), whereby a plurality of call numbers are assigned to the same alias name.

17. A telephony telecommunications system according to claim 16, **characterized in that** the server is connectable with each port for transmission of an assigned call number (RN2) to the port.

18. A telephony telecommunications system according to claim 16, **characterized in that** the server is connectable to a switching network (VN) for transmission of an assigned call number (RN2).

19. A telephony telecommunications system according to any one of claims 16 to 18, **characterized in that** the server is a WAP server.

20. A telephone telecommunication system according to any one of claims 16 to 19, **characterized in that** it is a mobile radio system.

## Revendications

1. Procédé de mémorisation d'un alias destiné à être utilisé ultérieurement pour établir une connexion de communication entre au moins deux terminaux (MS1, MS2) d'un système de télécommunication téléphonique pour lequel une chaîne de caractères alphanumérique (Alias2), entrée sous forme d'alias dans un terminal appelant (MS1), est transmise (B₄) à un serveur, un numéro d'appel (RN2) affecté à l'alias est émis (B₅, B' ₅) par le serveur (S) et la connexion entre le terminal appelant (MS1) et un terminal appelé (MS2) identifié par le numéro d'appel (RN2) est établie (B₆ ; B'₆, 67), **caractérisé en ce que**
le serveur (S) reçoit au préalable, par un utilisateur du terminal appelé (MS2), l'affectation d'au moins un alias (Alias2) à un numéro d'appel du terminal appelé (MS2) et mémorise celle-ci (A₁, A₂),
le serveur (S) vérifiant d'abord l'autorisation de l'utilisateur afin de définir un alias (Alias2) pour appeler son terminal (MS2),
le serveur (S) vérifiant, pour finir, si l'alias (Alias2) est déjà attribué à un autre numéro d'appel, et l'alias (Alias2) pour le terminal (MS2) étant entré dans une banque de données (DB) du serveur (S) seulement si l'utilisateur est autorisé à définir ledit alias et
(a) l'alias (Alias2) n'est pas déjà attribué ou
(b) l'utilisateur est autorisé à recevoir également l'alias (Alias2) déjà attribué, un même alias étant affecté à plusieurs numéros d'appel.

2. Procédé selon la revendication 1, **caractérisé en ce que** le serveur (S) transmet le numéro d'appel (RN2) au terminal appelant (B₅) et que le terminal appelant (MS1) établit la connexion en utilisant le numéro d'appel (B₆).

3. Procédé selon la revendication 1, **caractérisé en ce que** le serveur (S) transmet le numéro d'appel (RN2) à un réseau de commutation téléphonique (VN) qui établit (B'₆, B₇) la connexion, d'une part, vers le terminal appelant (MS1) et, d'autre part, vers le terminal appelé (MS2).

4. Procédé selon l'une quelconque des revendications précédentes, **caractérisé en ce qu'**il est signalé au terminal appelé (MS2) que le terminal appelé (MS2) est appelé en utilisant un alias au lieu de son numéro d'appel.

5. Procédé selon la revendication 4, **caractérisé en ce que** l'alias (Alias2) entré dans le terminal appelant (MS1) est signalé au terminal appelé (MS2).

6. Procédé selon l'une quelconque des revendications précédentes, **caractérisé en ce que** le serveur (S) affecte au numéro d'appel (RN1) du terminal appelant (MS1), qui lui a été transmis, un alias (Alias1) mémorisé au préalable dans le serveur (S) par l'utilisateur du terminal appelant (MS1), et que l'alias (Alias1) est signalé au terminal appelé (MS2) au lieu du numéro d'appel.

7. Procédé selon la revendication 6, **caractérisé en ce que** le serveur sélectionne un alias parmi plusieurs alias mémorisés du terminal appelant (MS1).

8. Procédé selon la revendication 7, **caractérisé en ce que** le serveur (S) effectue la sélection à l'aide d'une information supplémentaire signalée par le terminal appelant (MS1).

9. Procédé selon la revendication 7, **caractérisé en ce que** le serveur effectue la sélection à l'aide de l'identité du terminal appelé (MS2).

10. Procédé selon l'une quelconque des revendications précédentes, **caractérisé en ce qu'**un masque d'entrée destiné à entrer l'alias (Alias2) est transmis (B₃) au préalable au terminal appelant (MS1) pour être affiché sur un écran d'affichage du terminal appelant (MS1).

11. Procédé selon la revendication 10, **caractérisé en ce que** le terminal appelant (MS1) dispose d'un browser WAP et que le masque d'entrée est affiché à l'aide du browser WAP.

12. Procédé selon l'une quelconque des revendications précédentes, **caractérisé en ce que** le terminal appelant (MS1) est compatible avec le WAP et que l'alias (Alias2) du terminal appelé (MS2) est transmis au serveur (S) par le biais du WAP.

13. Procédé selon l'une quelconque des revendications précédentes, **caractérisé en ce que** le terminal appelé (MS2) dispose d'un browser WAP et que le browser WAP est utilisé pour afficher les informations concernant l'appel entrant.

14. Procédé selon l'une quelconque des revendications précédentes, **caractérisé en ce que** le terminal appelant (MS1) essaye d'abord, en vue de l'entrée d'alias (Alias2), à l'aide de sa propre banque de données de déterminer un numéro d'appel correspondant à l'alias et que l'alias (Alias2) est transmis au serveur (S) seulement en cas d'échec de cet essai.

15. Procédé selon l'une quelconque des revendications 6 à 14, **caractérisé en ce que** le même alias (Alias1) est affecté au terminal appelant (MS1) ainsi qu'à plusieurs autres terminaux.

16. Système de télécommunication téléphonique destiné à la mémorisation et l'utilisation ultérieure d'un alias lors de l'établissement d'une connexion avec plusieurs branchements pour terminaux (MS1, MS2) à chacun desquels est affecté distinctement un numéro d'appel (RN1, RN2), un réseau de commutation téléphonique (VN) destiné à commuter des connexions entre les branchements et un serveur (S) pour recevoir une chaîne de caractères alphanumérique (Alias2) d'un branchement appelant (MS1), faisant fonction d'alias d'un branchement appelé, et destiné à fournir un numéro d'appel (RN2) affecté à l'alias (Alias2), **caractérisé en ce que**
le serveur (s) est configuré de manière à recevoir et mémoriser l'affectation d'au moins un alias (Alias2) à un numéro d'appel du terminal appelé (MS2) par un utilisateur du terminal appelé (MS2), le serveur (S) vérifiant d'abord l'autorisation de l'utilisateur pour définir un alias (Alias2) afin d'appeler son terminal (MS2),
le serveur (S) vérifie, pour finir, si l'alias (Alias2) est déjà attribué à un autre numéro d'appel, et l'alias (Alias2) pour le terminal (MS2) est entré seulement dans une banque de données (DB) du serveur (S) si l'utilisateur est autorisé à définir ledit alias et
(a) l'alias (Alias2) n'est pas encore attribué ou
(b) l'utilisateur est autorisé à recevoir également l'alias déjà attribué (Alias2), un même alias étant affecté à plusieurs numéros d'appel.

17. Système de télécommunication téléphonique selon la revendication 16, **caractérisé en ce que** le serveur peut être connecté à chaque branchement afin de transmettre un numéro d'appel associé (RN2) audit branchement.

18. Système de télécommunication téléphonique selon la revendication 16, **caractérisé en ce que** le serveur peut être connecté à un réseau de commutation téléphonique (VN) afin de transmettre un numéro d'appel associé (RN2).

19. Système de télécommunication téléphonique selon l'une quelconque des revendications 16 à 18, **caractérisé en ce que** le serveur est un serveur WAP.

20. Système de télécommunication téléphonique selon l'une quelconque des revendications 16 à 19, **caractérisé en ce qu'**il s'agit d'un système de radiotéléphonie mobile.
